# EUROPÄISCHE PATENTSCHRIFT

(11) **EP 2 076 458 B1**
(45) Veröffentlichungstag und Bekanntmachung des Hinweises auf die Patenterteilung: **09.09.2015**
(21) Anmeldenummer: 07787220.8
(22) Anmeldetag: 09.07.2007
(51) Int. Cl.: B65G 43/02, G01B 11/25, G01B 11/30

(54) **EINRICHTUNG ZUR ÜBERWACHUNG EINER FÖRDERANLAGE**
DEVICE FOR MONITORING A CONVEYING SYSTEM
DISPOSITIF DE CONTRÔLE D'UNE INSTALLATION DE TRANSPORT

(30) Priorität: 13.09.2006 DE 102006042907
(43) Veröffentlichungstag der Anmeldung: 08.07.2009
(73) Patentinhaber: Phoenix Conveyor Belt Systems GmbH, 07422 Bad Blankenburg (DE)
(72) Erfinder: KÜSEL, Bernd, 21077 Hamburg (DE)
(74) Vertreter: Finger, Karsten
(86) Internationale Anmeldenummer: PCT/EP2007/056943
(87) Internationale Veröffentlichungsnummer: WO 2008/031648

(56) Entgegenhaltungen:
- WO-A-2005/023688
- DE-A1- 2 413 543
- DE-A1- 10 048 552
- DE-A1- 10 063 293

## Beschreibung

Die Erfindung betrifft eine Einrichtung zur Überwachung einer Förderanlage gemäß dem Oberbegriff des Anspruchs 1.

Da Fördergurte in Minenanlagen oft die wichtigsten Teile der Anlage darstellen, deren Versagen häufig einen kompletten Produktionsstillstand bedeuten kann, werden Verfahren zur automatischen, kontinuierlichen Überwachung der Fördergurte verlangt. Neben den bekannten Verfahren der Schlitzüberwachung (DE 44 44 264 C2) und der Verbindungsüberwachung (EP 1 053 447 B1) sind auch Methoden zur Überwachung der gesamten Gurtoberfläche gefragt, um Verschleißschäden oder oberflächliche Beaufschlagungsschäden und deren Weiterentwicklung während des Betriebes zu erkennen und bei Erreichen eines kritischen Zustandes den Gurt still zu setzen, um rechtzeitig Reparaturmaßnahmen einzuleiten.

Zur Erreichung dieses Zieles wird der Einsatz opto-elektronischer Systeme, insbesondere in Form elektronischer Kamerasysteme (Zeilenkamera oder Flächenkamera), vorgeschlagen, wobei insbesondere auf folgenden Stand der Technik verwiesen wird:
DE 42 40 094 A1
DE 100 29 545 A1
DE 101 00 813 A1
DE 101 29 091 A1
DE 101 40 920 A1
EP 1 187 781 B1
EP 1 222 126 B1

Diese opto-elektronischen Systeme generieren Bilder von der zu überwachenden Gurtoberfläche, insbesondere die der Tragseite, verbunden mit einer automatischen Auswertung und Beurteilung der so gewonnenen Bildinformation. Um eine wirksame automatische Überwachung des gesamten Gurtes durchführen zu können, ist ferner die millimetergenaue Lokalisierung jeder beliebigen Stelle des Gurtes entwickelt worden, da nur so mit Hilfe automatischer Bildverarbeitungssoftware eine Verfolgung der Schadensentwicklung über einen gewissen Zeitraum bewerkstelligt werden kann (WO 2005/023688A1).

Aus der Offenlegungschrift DE 42 40 094 A1 ist eine Einrichtung zur Überwachung einer Förderanlage bekannt, wo zusätzlich zu dem opto-elektronischen System ein Projektor vorhanden ist, der Licht auf das Fördermaterial wirft. Zielsetzung ist es, den Materialstrom zu überwachen. Erfasst wir dabei der Oberkantenverlauf des Fördermaterials.

Die DE 100 48 552 A1 betrifft eine Einrichtung zur Überwachung einer Förderanlage, wobei ein Bereich, in dem keine Materialbeförderung stattfindet, mit einem optoelektronischen System versehen ist, welches unter Beobachtung der Tragseite eine Beschädigung des Fördergurtes optisch erfasst und meldet.

Die DE 100 63 293 A1 betrifft ein Verfahren und eine Vorrichtung zur mehrkanaligen Inspektion von Oberflächen im Durchlauf. Hierzu wird durch einen Projektor für strukturiertes Licht eine Anzahl von parallelen kurzen Linien auf die zu inspizierende Oberfläche projiziert. Die kurzen projizierten Linien und die Untersuchungslinie der Kamera stehen senkrecht zueinander und schneiden einander. Es wird eine Zeilenkamera als Bilderfassungsvorrichtung verwendet, so dass die Untersuchungslinien der Zeilenkamera über die Breite des zu untersuchenden Gegenstandes verlaufen. Da die projizierten Linien des Projektors senkrecht zu den Untersuchungskennlinien stehen, verläuft das strukturierte Licht in Bewegungsrichtung des zu untersuchenden Objekts.

Im Rahmen einer Weiterentwicklung unter Einsatz eines opto-elektronischen Systems in Verbindung mit einem Projektor besteht die Aufgabe der Erfindung darin, neben der flächenmäßigen (zweidimensionalen) Schadenserfassung auch die Tiefe von Fördergurtschäden zu erfassen, um Rückschlüsse auf die Schwere der Beschädigung ziehen zu können.

Gelöst wird diese Aufgabe durch eine Vorrichtung mit den Merkmalen gemäß Patentanspruch 1.

Zweckmäßige Ausgestaltungen der neuen Einrichtung sind in den Patentansprüchen 2 bis 7 genannt.

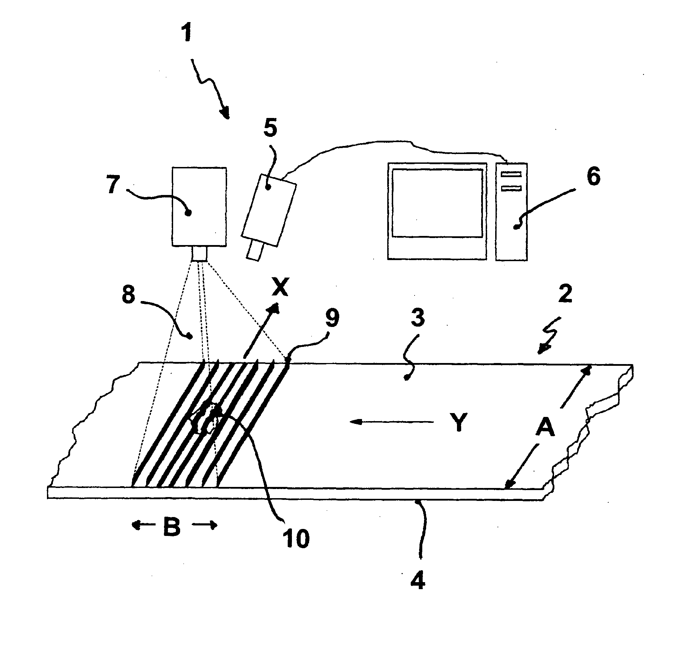

Die Erfindung wird nun anhand eines Ausführungsbeispieles unter Bezugnahme auf eine schematische Zeichnung erläutert. Die einzige Figur zeigt dabei eine Förderanlage mit Projektor, der ein strukturiertes Licht auf die Tragseite eines Fördergurtes wirft.

Nach der einzigen Figur umfasst die Förderanlage 1 einen Fördergurt 2 aus elastomerem Werkstoff mit einer Tragseite 3 und Laufseite 4. Das opto-elektronische System 5 erfasst optisch die Tragseite des Fördergurtes. Ein Prozessrechner 6, der mit dem optoelektronischen System gekoppelt ist, wertet die Daten aus, wobei der Prozessrechner mit einem Warnmelder und/oder einer Antriebssteuerung in Verbindung steht.

Die Förderanlage 1 umfasst ferner einen Projektor 7, der ein strukturiertes Licht 8 auf eine materialfreie Zone des Fördergurtes 2 wirft. Das strukturierte Licht ist hier in Form von pararallel verlaufenden Lichtstreifen 9 mit Hell- und Dunkelzonen oder unterschiedlichen Farbzonen ausgebildet. Der Projektor ist dabei so eingestellt, dass das strukturierte Licht (Lichtstreifen) in seiner Haupterstreckungsrichtung X quer zur Förderrichtung Y verläuft und zudem die gesamte Fördergurtbreite A erfasst. In Förderrichtung Y weist das strukturierte Licht (Lichtstreifen) eine Erstreckungsdimension B auf, die wenigstens die halbe Fördergurtbreite A einnimmt.

Bei einem unbeschädigten Fördergurt, der keine Vertiefungen aufweist, findet im Vergleich zum ausgesendeten strukturierten Licht 8 keine Strukturänderung statt, jedenfalls keine signifikante Strukturänderung. Im vorliegenden bevorzugten Ausführungsbeispiel nehmen die parallel verlaufenden Lichtstreifen bei einem unbeschädigten Fördergurt auf der Gurtoberfläche (hier Tragseite) eine unveränderte Strukturkonstellation ein.

Fällt jedoch das strukturierte Licht 8 auf eine Anomalie, hervorgerufen durch eine Beschädigung 10, so krümmt es sich entsprechend der Tiefe oder Höhe der Anomalie. Das Licht (Lichtstreifen) wird seitlich versetzt.

Das opto-elektronische System 5, insbesondere in Form eines digitalen Kamerasystems, erkennt diese Strukturänderung durch Versatz. Der Prozessrechner 6 verarbeitet die trigonometrische Relation und errechnet die Tiefe der Beschädigung 10 durch Triangulation.

Je nach Betriebsbedingung und Art des Fördergurtes 2 wird das opto-elektronische System 5 so programmiert, dass ein Warnsignal und/oder die automatische Abschaltung der Förderanlage 1 ausgelöst wird, wenn beispielsweise die Tiefe der Beschädigung 10 zwei Millimeter übersteigt.

Von besonderer Bedeutung ist die Schadenserfassung der Tragseite eines Fördergurtes. Das opto-elektronische System 5 und der Projektor 7 erfassen dabei die Tragseite im Bereich einer materialfreien Trommel, beispielsweise im Bereich der Umkehrtrommel.

Ansonsten können die bisher bekannten Förderanlagen, die ein opto-elektronisches System gemäß dem eingangs zitierten Stand der Technik umfassen, ohne aufwendige Zusatzmaßnahmen mit dem Projektor, der das strukturierte Licht aussendet, ausgestattet werden. So kann beispielsweise im Hinblick auf die millimetergenaue Schadenslokalisierung die Technologie gemäß WO 2005/023668 A1 angewandt werden, indem der Projektor in die in dieser Druckschrift offenbarten Anlagenkonstruktion integriert wird.

### Bezugszeichenliste

### (Teil der Beschreibung)

- 1: Förderanlage
- 2: Fördergurt
- 3: Tragseite (Gurtoberfläche)
- 4: Laufseite (Gurtoberfläche)
- 5: opto-elektronisches System
- 6: Prozessrechner mit Bildauswertung
- 7: Projektor
- 8: strukturiertes Licht
- 9: Lichtstreifen
- 10: Schäden/Beschädigung
- X: Haupterstreckungsrichtung des strukturierten Lichtes
- Y: Förderrichtung
- A: Fördergurtbreite
- B: Erstreckungsdimension des strukturierten Lichtes in Förderrichtung

## Patentansprüche

1. Einrichtung zur Überwachung einer Förderanlage (1), umfassend:
einen Fördergurt (2) aus elastomerem Werkstoff mit einer Tragseite (3) für das Fördermaterial und einer Laufseite (4), wobei der Fördergurt insbesondere einen eingebetteten Festigkeitsträger aufweist;
ein opto-elektronisches System (5), das die Tragseite (3) und/oder Laufseite (4) optisch erfasst, indem es Schäden (10) während des Betriebes erkennt und bei Erreichen eines kritischen Zustandes des Fördergurtes (2) einen Warnmelder auslöst und/oder insbesondere eine automatische Abschaltung der Förderanlage (1) bewirkt;
einen Projektor (7), der ein Licht (8) auf die Tragseite (3) und/oder Laufseite (4) wirft;
einen Prozessrechner (6), der mit dem opto-elektronischen System (5) gekoppelt ist, zwecks Auswertung aller Daten, wobei der Prozessrechner mit dem Warnmelder und/oder einer Antriebssteuerung in Verbindung steht; sowie sonstige Anlagenteile, nämlich Trommeln, Tragrollen, Traggerüste sowie gegebenenfalls weitere Bauteile;
wobei der Projektor (7) ein strukturiertes Licht (8) auf eine materialfreie Zone der Tragseite (3) und/oder auf die Laufseite (4) wirft,
wobei die Strukturänderung des Lichtes (8) auf der Gurtoberfläche (3, 4), die durch eine Beschädigung (10) des Fördergurtes (2) hervorgerufen wird, vom optoelektronischen System (5) erfasst und vom Prozessrechner (6) ausgewertet wird, und wobei der Projektor (7) so eingestellt ist, dass das strukturierte Licht (8) in Form von parallel verlaufenden Lichtstreifen (9) ausgebildet ist,
**dadurch gekennzeichnet, dass**
die Lichtstreifen (9) Hell- und Dunkelzonen oder unterschiedlichen Farbzonen aufweisen, quer zur Förderrichtung (Y) verlaufen und die gesamte Fördergurtbreite (A) erfassen.

2. Einrichtung nach Anspruch 1 , **dadurch gekennzeichnet, dass** der Projektor (7) so eingestellt ist, dass das strukturierte Licht (8) in Förderrichtung (Y) eine Erstreckungsdimension (B) aufweist, die wenigstens die halbe Fördergurtbreite (A) einnimmt.

3. Einrichtung nach einem der Ansprüche 1 oder 2, **dadurch gekennzeichnet, dass** das strukturierte Licht (8) ausschließlich die Tragseite (3) des Fördergurtes (2) erfasst.

4. Einrichtung nach Anspruch 3, **dadurch gekennzeichnet, dass** das strukturierte Licht (8) die Tragseite (3) im Bereich einer materialfreien Trommel erfasst.

## Claims

1. Device for monitoring a conveying system (1), comprising:
a conveyor belt (2) which is made of elastomeric material and has a carrying side (3) for the material being conveyed and a running side (4), the conveyor belt having, in particular, an embedded strength member;
an optoelectronic system (5) which optically senses the carrying side (3) and/or running side (4) by detecting damage (10) during operation and triggering an alarm device and/or automatically switching off the conveying system (1), in particular, when a critical state of the conveyor belt (2) is reached;
a projector (7) which casts light (8) onto the carrying side (3) and/or running side (4);
a process computer (6) which is coupled to the optoelectronic system (5) for the purpose of evaluating all data, the process computer being connected to the alarm device and/or a drive controller; and
other system parts, namely drums, supporting rollers, supporting frames and possibly further components;
the projector (7) casting structured light (8) onto a material-free zone of the carrying side (3) and/or onto the running side (4),
the structural change in the light (8) on the belt surface (3, 4), which is caused by damage (10) to the conveyor belt (2), being sensed by the optoelectronic system (5) and being evaluated by the process computer (6), and
the projector (7) being adjusted in such a manner that the structured light (8) is in the form of parallel running light strips (9),
**characterized in that**
the light strips (9) have light and dark zones or different colour zones, run transversely with respect to the conveying direction (Y) and sense the entire width (A) of the conveyor belt.

2. Device according to Claim 1, **characterized in that** the projector (7) is adjusted in such a manner that the structured light (8) has, in the conveying direction (Y), an extent dimension (B) which occupies at least half the width (A) of the conveyor belt.

3. Device according to either of Claims 1 and 2, **characterized in that** the structured light (8) senses only the supporting side (3) of the conveyor belt (2).

4. Device according to Claim 3, **characterized in that** the structured light (8) senses the carrying side (3) in the region of a material-free drum.

## Revendications

1. Dispositif de surveillance d'une installation de transport (1) comprenant :
une courroie transporteuse (2) en un matériau élastomère, dotée d'un côté porteur (3) pour la matière à transporter et d'un côté d'avancement (4), un renfort étant en particulier incorporé dans la courroie transporteuse,
un système optoélectronique (5) qui saisit optiquement le côté porteur (3) et/ou le côté d'avancement (4) de manière à détecter des dommages (10) en fonctionnement et, lorsque la courroie transporteuse (2) a atteint un état critique, déclencher un avertisseur et/ou avoir en particulier pour effet un débranchement automatique de l'installation de transport (1),
un projecteur (7) qui projette une lumière (8) sur le côté porteur (3) et/ou sur le côté d'avancement (4),
un calculateur de processus (6) couplé au système optoélectronique (5) dans le but d'évaluer toutes les données, le calculateur de processus étant raccordé à l'avertisseur et/ou à une commande d'entraînement,
ainsi que d'autres parties d'installation, à savoir des tambours, des rouleaux de support, des bâtis de support ainsi qu'éventuellement d'autres composants,
le projecteur (7) projetant une lumière structurée (8) sur une zone exempte de matière du côté porteur (3) et/ou du côté d'avancement (4),
la modification de structure de la lumière (8) sur la surface (3, 4) de la courroie provoquée par une dégradation (10) de la courroie transporteuse (2) étant saisie par le système optoélectronique (5) et évaluée par le calculateur de processus (6), le projecteur (7) étant réglé de telle sorte que la lumière structurée (8) présente la forme de rubans de lumière (9) s'étendant en parallèle,
**caractérisé en ce que**
les rubans de lumière (9) présentent des zones claires et des zones sombres ou des zones de différentes couleurs, s'étendent transversalement par rapport à la direction de transport (Y) et saisissent la totalité de la largeur (A) de la courroie transporteuse.

2. Dispositif selon la revendication 1, **caractérisé en ce que** le projecteur (7) est réglé de telle sorte que la lumière structurée (8) présente dans la direction de transport (Y) une dimension d'extension (B) qui occupe au moins la moitié de la largeur (A) de la courroie transporteuse.

3. Dispositif selon l'une des revendications 1 ou 2, **caractérisé en ce que** la lumière structurée (8) saisit exclusivement le côté porteur (3) de la courroie transporteuse (2).

4. Dispositif selon la revendication 3, **caractérisé en ce que** la lumière structurée (8) saisit le côté porteur (3) au niveau d'un tambour exempt de matière.
